# EUROPEAN PATENT APPLICATION

(11) **EP 1 950 931 A1**
(43) Date of publication of application: **30.07.2008**
(21) Application number: 07123504.8
(22) Date of filing: 18.12.2007
(51) Int. Cl.: H04L 29/08

(54) **Devices, system and method for distributing and synchronizing service data**

(30) Priority: 26.01.2007 CN 200710002695
(71) Applicant: Huawei Technologies Co., Ltd., Longgang District, Shenzhen Guangdong 518129 (CN)
(72) Inventor: Li, Dawei c/o Huawei Technologies Co., Ltd., 518129, Guangdong (CN); Fang, Qiang c/o Huawei Technologies Co., Ltd., 518129, Guangdong (CN)
(74) Representative: Thun, Clemens

(57) **Abstract**

The present invention discloses a service distributing device (12) including a task distributing and managing module (122) and a sub-node interface module (124). The present invention also discloses a service receiving device including a service receiving and deploying module (132) and a central node interface module (134). The present invention also discloses a system for distributing and synchronizing a service including a central node and a sub-node. The present invention also discloses a service handling method for distributing and synchronizing a service, including: each sub-node receives a service data packet from the central node and deploys the service data in the service data packet; and the sub-nodes synchronously start the running of the service data when receiving a service being online message sent by the central node. In the present invention, maintenance personnel are not needed in the sub-node at each site and thus manpower and material resources are spared.

## Description

### Field of the Technology

The present invention relates to distributed service technologies, and particularly, to a device, a system and a method for distributing and synchronizing a service.

### Background of the Invention

At present, along with the wide development of data services, the types and number of services, as well as the number of users using the services all are increasingly rising in respect of the Internet, a mobile communication network, or a fixed network. For example, in a mobile communication network, there are services, such as mobile phone newspapers, mobile instant communication software (e.g. QQ), and online question and answer through a mobile phone, while in a fixed network, there also are services such as phone banking services and Best Tone services.

At present, many service operators adopt a distributed deployment scheme to build corresponding service platforms at various sites, so as to improve the access performance of service and lighten the burden on the service platforms. For example, an operator of a mobile communication network may build a service platform for a service in a branch company in each province. However, such a method has a problem of distributing and synchronizing a service, that is, how to distribute a service to each service platform and how to synchronously perform the service in each service platform.

In a solution in the prior art, when an operator launches a service, the software carrier containing the codes of the service is recorded in mobile storage devices such as CD-ROMs or disks, and the codes of the service are transferred to and deployed in the service platforms distributed in various sites by means of the mobile storage devices.

However, there are the following issues in the above solution. First, due to the geographic distribution of the service platforms in which the service is run, it is difficult to synchronously complete the deployment of service at various sties and thus the gaps between the times when the service is online at various sties are large. Moreover, the lifecycles of some services are very short, for example, the lifecycles of some online voting services may be only several or more than ten days. However, it takes a long time to complete the deployment of the online voting services at all of the sites. As a result, the operation of the service does not worth the candle.

Second, the cost of maintenance of service is high. On one hand, corresponding manpower needs to be planned in each service platform to perform the maintenance. On the other hand, when versions of services need to be updated, the services need to be distributed and deployed again at various sites. Thus, the cost of secondary building is spent.

### Summary of the Invention

The present invention provides a device, a system and a method for distributing and synchronizing a service to be used in the operation of automatically distributing and synchronizing the service so as to reduce the cost of deployment and maintenance of the service.

A service distributing device includes:
a task distributing and managing module, adapted to issue a service data packet and send a service task control instruction to each sub-node;
a sub-node interface module, adapted to perform information interaction with the sub-node.

The service task control instruction includes: a service being online message, a service being offline message and a service state query request message.

The service distributing device further includes:
a service managing platform interface module, adapted to transfer a message between the service distributing device and a service managing platform; and
the task distributing and managing module issues the service data packet and sends the service task control instruction to the sub-node according to an instruction received from the service managing platform via the service managing platform interface module.

The service distributing device further includes:
a logging and authenticating module, adapted to authenticate the sub-node logging in to the service distributing device;

The service distributing device further includes:
a first encryption and decryption module, adapted to encrypt and decrypt a message transferred between the service distributing device and the sub-node.

A service receiving device includes:
a service receiving and deploying module, adapted to receive a service data packet and a service task control instruction, and deploy service data in the service data packet;
a service running device interface module, adapted to perform communication between the service receiving and deploying module and a service running device to instruct the service running device to execute the service task control instruction;
a central node interface module, adapted to perform information interaction with a central node.

The service task control instruction includes:
a service being online message, a service being offline message and a service state query request message.

The service receiving device further includes:
a logging module, adapted to send a logging request to the central node via the central node interface module to implement logging in to the central node.

The service receiving device further includes:
a second encryption and decryption module, adapted to encrypt and decrypt a message transferred between the service receiving device and the central node.

A system for distributing and synchronizing a service includes:
a central node, adapted to issue a service data packet and issue a service task control instruction to control execution of a service task;
a sub-node, adapted to receive a service data packet, deploy service data in the service data packet, and execute the service task under the control of the central node.

The system for distributing and synchronizing a service of the service task includes:
a service being online task, a service being offline task and a service querying task.

The central node includes: a service managing platform and a service distributing device; and:
the service managing platform is adapted to load a service data packet, configure a service task, and instruct the service distributing device to issue the service data packet and execute the service task;
the service distributing device is adapted to issue the service data packet and the service task control instruction to the sub-node according to an instruction of the service managing platform.

The system for distributing and synchronizing a service the sub-node includes: a service receiving device and a service running device; and:
the service receiving device is adapted to receive the service data packet and the service task control instruction issued by the central node, deploy the service data in the service data packet into the service running device, and instruct the service running device to execute the service task according to the service task control instruction received from the service receiving device;
the service running device is adapted to run the service data deployed by the service receiving device and execute the service task according to the service task control instruction.

A service processing method includes:
receiving, by each sub-node, a service data packet of a service from a central node and deploying service data in the service data packet;
synchronously starting, by the sub-nodes, running of the service data when receiving a service being online message sent by the central node.

The service processing method further includes:
reporting, by each sub-node, service running state information when receiving a querying for the service running state information by the central node in the running process of a service, or
reporting the service running state information actively.

The service processing method further includes:
synchronously stopping, by the sub-nodes, the running of the service data when receiving a service being offline message sent by the central node in the running process of the service.

The service processing method further includes:
establishing, by the sub-node and the central node, a long Transmission Control Protocol (TCP) connection, and keeping the continuous connection of the long TCP connection by sending a heartbeat message to a peer end periodically after establishing the long TCP connection.

The service processing method further includes:
before receiving the service data packet sent by the central node,
sending, by the sub-node, a logging request message to the central node, and checking, by the central node, logging information in the logging request message, authenticating identity of the sub-node and verifying whether the sub-node has an authority to run the service.

The service processing method further includes:
after deploying the service data,
returning, by the sub-node, a response message carrying information indicating whether the service data has been deployed successfully to the central node.

The service processing method the querying by the central node the service running state information includes:
sending, by the central node, a service state query request message to the sub-node according to a task configured in advance; and
collecting, by the sub-node, the service running state information to be queried for upon receiving the service state query request message, and reporting the service running state information to the central node.

The reporting the service running state information by the sub-node actively, includes:
detecting, by the sub-node, a service running state periodically, and sending the service running state information to the central node.

A service distributing device is adapted to acquire a service identification of a service to be distributed, a service data packet of the service, and a respective identification of each sub-node required to execute the service, send the service data packet and the service identification to the sub-node corresponding to the identification of the sub-node so as to enable the sub-node to deploy the service; send a service being online message carrying the service identification to the sub-node for instructing the sub-node to start running of the service, upon receiving an instruction carrying the service identification for service being online.

The service distributing device is adapted to send a service state query request to the sub-node corresponding to the service identification according to the service identification and the identification of the sub-node carried in a service state querying instruction, upon receiving an instruction for querying for service state data, and receive a query result from the sub-node.

The service distributing device is adapted to send a service being offline message carrying the service identification to the sub-node for instructing the sub-node to stop running of the service, upon receiving an instruction carrying the service identification for service being offline.

A service receiving device is adapted to acquire a service identification of a service and a service data packet containing service data of the service from a central node, deploy the service data into a service running device according to the type of the service data; instruct the service running device to start the service corresponding to the service identification, upon receiving a service being online message carrying the service identification.

The service receiving device is adapted to receive a service state query request from the central node, and parse the service state query request to acquire the identification of the service to be queried for and a query condition, instruct the service running service to collect the service state data according to the service identification to be queried for and the query condition, and return the service state data collected to the central node.

The service receiving device is adapted to receive service running state information reported actively by the service running device, and forward the service running state information to the central node.

The service receiving device is adapted to receive a service being offline message from the central node, and instruct the service running device to stop the service corresponding to the service identification carried in the service being offline message.

A central node subsystem includes:
the service distributing device; and
a service managing platform is adapted to load the service data packet, configure a service task, and instruct the service distributing device to issue the service data packet and execute the service task.

A sub-node subsystem includes:
the service receiving device; and
a service running device, adapted to run the service data deployed by the service receiving device and execute a service task according to a service task control instruction.

A system includes:
the central node subsystem; and
at least one sub-node subsystem.

In the present invention, the automatic distributing of a service and the synchronization of the running of the service are implemented by automatically distributing the codes of the service to a service running device and executing the operation of making the service be online or offline. Meanwhile, since the distribution and synchronization of a service are automatically implemented by a device, special maintenance personnel do not need to be provided in the sub-node at each site and thus manpower and material resources are spared. Other objects and advantages of the invention will become apparent from a consideration of the drawings and ensuing description.

### Brief Description of the Drawings

Fig. 1 shows a schematic diagram illustrating the structure of a system for distributing and synchronizing a service in accordance with an embodiment of the present invention.
Fig. 2 shows a schematic diagram illustrating the internal structure of a service distributing device in accordance with an embodiment of the present invention.
Fig. 3 shows a schematic diagram illustrating the internal structure of a service receiving device in accordance with an embodiment of the present invention.
Fig. 4 shows a schematic flow chart of the method for distributing a service in accordance with an embodiment of the present invention.
Fig. 5 shows a schematic flow chart of the method for making a service be online and offline in accordance with an embodiment of the present invention.
Fig. 6 shows a schematic flow chart of the method for querying for a service state in accordance with an embodiment of the present invention.
Fig. 7 shows a schematic flow chart of the method for reporting a service state in accordance with an embodiment of the present invention.

### Detailed Descriptions of the Invention

In accordance with embodiments of the present invention, service data packets are automatically issued to various sub-nodes, the sub-nodes deploy service data according to the received service data packets and synchronously start or stop the running of the service data through a service task control instruction issued by a central node. Thus, the automatic distribution of service and the synchronization of the operation of service are implemented. The service data in the embodiments of the present invention may be service codes or service information in other data formats. Meanwhile, since the distribution and synchronization of service are automatically implemented by devices, special maintenance personnel are not needed in the sub-nodes at various sites and manpower and material resources are economized. Moreover, in the present invention, the logging of the sub-node at various sites to the central node may be authenticated, and encryption protection may be performed for the message transfer between the sub-node and the central node. Thus, the security and reliability of the whole system are guaranteed.

The present invention is hereinafter described in detail with reference to the drawings to further clarify technical solutions and advantages of the present invention.

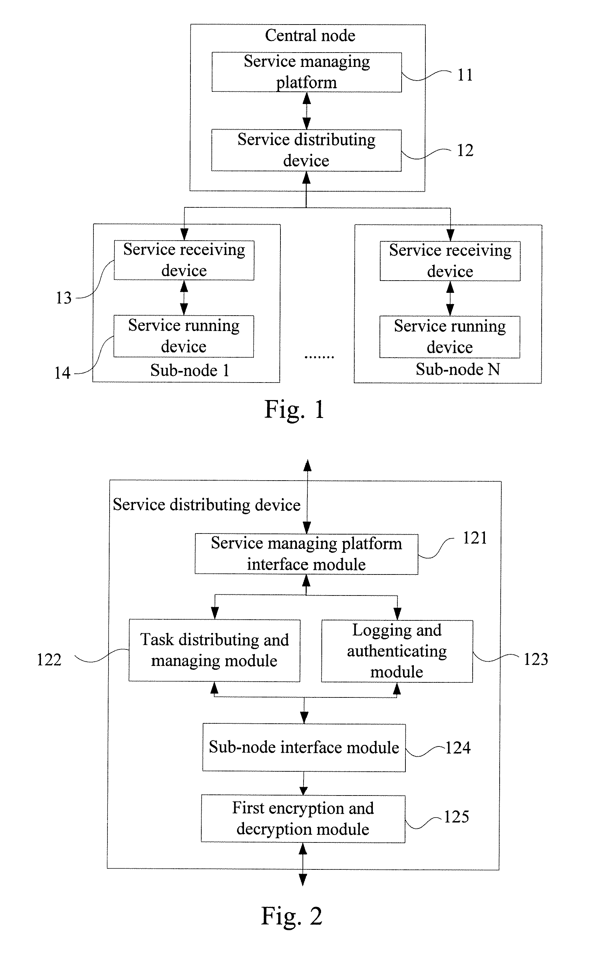

Fig. 1 shows a schematic diagram illustrating the structure of a system for distributing and synchronizing a service in accordance with an embodiment of the present invention. The system includes one central node and multiple sub-node devices. Various sub-node devices are distributed deployment. The centralized management and automatic distribution of service and the synchronous operation of various sub-nodes may be implemented by means of the system. The central node includes the components as follows.

Service managing platform 11 is used for implementing the centralized management of service, providing an administrator of the central node with a unified management interface for distribution and synchronization of service, service state query, and data statistics; loading a service data packet and configuring a service task, such as a service distributing task, a service state querying task, a service being online task, and a service being offline task, via the unified management interface; instructing service distributing device 12 to issue a service data packet and execute a service task, and receiving a service task execution response information reported by service distributing device 12.

Service distributing device 12 is used for distributing a service data packet to various sub-nodes required to execute a service, sending a service task control instruction to various sub-nodes according to a service task execution instruction, for example, controlling the synchronous start and stop of the service at various sub-nodes by sending a service being online message or a service being offline message, querying for service state data in a service running process via a service state query request message, and forwarding the service state data including service running state information reported by various sub-nodes to service managing platform 11. Service distributing device 12 may be further used for authenticating a sub-node logging in to the system for the first time. The authentication mainly includes checking logging information reported by the sub-nodes. The logging information includes the identification of the sub-node logging in to the system, the logging IP or the logging password. In accordance with the embodiments of the present invention, the start of a service is called service being online, and the stop of a service is called service being offline.

The sub-node includes the devices as follows.

Service receiving device 13 is used for receiving a service data packet and a service task control instruction issued by service distributing device 12, deploying service data to service running device 14, instructing service running device 14 to execute the service task control instruction. For example, in the case that the service task control instruction is a service being online message or a service being offline message, service receiving device 13 instructs the service running device to implement the synchronous start or stop of the service; in the case that the service task control instruction is a service state query request, service receiving device 13 instructs service running device 14 to collect the service state data including service running state information to be queried for, and returns the service state data acquired through the query to service distributing device 12, or receives the service running state information reported by service running device 14 actively and sends the service running state information to service distributing device 12 in the running process of the service. Service running device 14 may implement the reporting actively by regular detecting the running state of service. Service receiving device 13 may be further used for a sub-node to log in to the central node, mainly including sending information such as the identification of the sub-node and the logging password to service distributing device 12 of the central node, and logging in to the central node after the authentication is passed.

Service running device 14 is used for running service data deployed by service receiving device 13, and executing the service task according to a service task control instruction or reporting the service running state information to the service receiving device 13 in the running process actively.

Fig.2 shows a schematic diagram illustrating the internal structure of service distributing device 12 in accordance with an embodiment of the present invention. The service distributing device specifically includes:
service managing platform interface module 121, for performing communication with service managing platform 11 and transferring a message between service distributing device 12 and service managing platform 11;
task distributing and managing module 122, for running a service distributing task, a service being online task, a service being offline task, and a service state querying task configured in advance, and issuing a service distributing message, a service being online message, a service being offline message and a service state query request message to various sub-nodes;
logging and authenticating module 123 for authenticating various sub-nodes logging in to service distributing device 12;
sub-node interface module 124, for performing message interaction with various sub-nodes, and further for establishing and maintaining a communication link between service distributing device 12 and service receiving device 13;
first encryption and decryption module 125, for encrypting and decrypting a message transferred between each sub-node interface module and each sub-node.

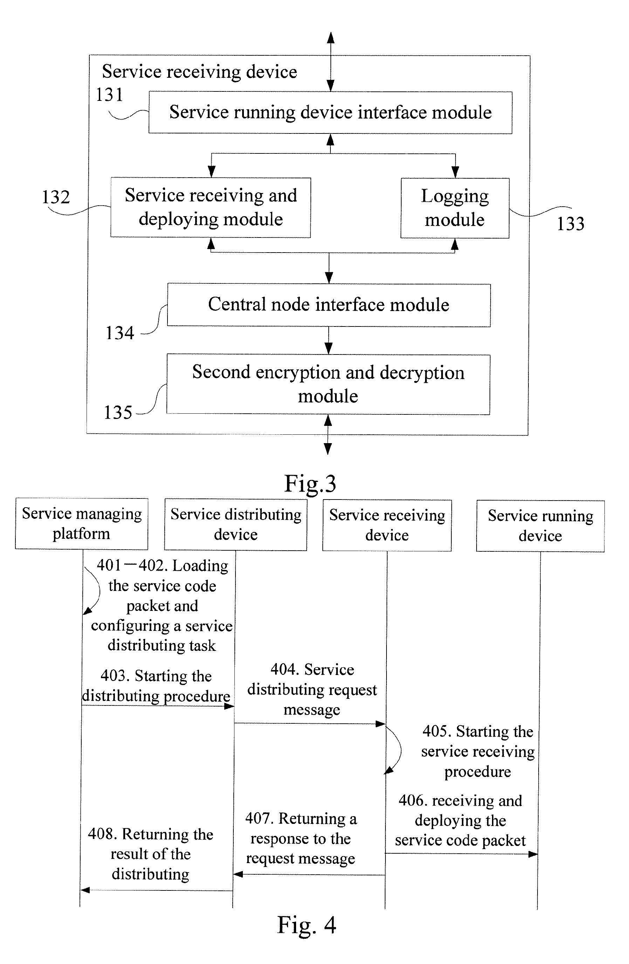

Fig.3 shows a schematic diagram illustrating the internal structure of service receiving device 13 in accordance with another embodiment of the present invention. The service receiving device specifically includes:
service running device interface module 131, for performing communication between service receiving and deploying module 132 and service running device 14 and instructing service running device 14 to execute a service task control instruction;
service receiving and deploying module 132, for deploying the service data in a service data packet received from service distributing device 12 to service running device 14, receiving a service task control instruction, returning the service state data queried for by a central node to the central node via central node interface module 134, and forwarding the service running state reported by service running device 14 to service distributing device 12 via central node interface module 134;
logging module 133, for initiating a logging request to the central node via central node interface module 134, so that the sub-node to which service receiving device 13 belongs may log in to the central node;
central node interface module 134, for performing message interaction with the central node, and further for establishing and maintaining a communication link between service receiving device 13 and service distributing device 12;
second encryption and decryption module 135, for encrypting and decrypting a message transferred between service receiving and deploying module 132 and the central node.

In the above embodiments, the service task control instruction may also be executed by the service receiving and deploying module without instructing the service running device to execute the service task control instruction.

In the system for distributing and synchronizing a service in accordance with the embodiments of the present invention, a service data packet, e.g., service code packet, may be automatically distributed and deployed to the service running device via the service distributing device and the service receiving and deploying module in the service receiving device; further, the logging and authentication of each sub-node may be implemented via the logging module and the logging and authenticating module when the sub-node accesses the system in accordance with the embodiments of the present invention, and the security in the message transfer process is guaranteed through the encryption protection for a message by the encryption and decryption module.

In the embodiments of the present invention, before distributing and synchronizing a service, a central node is required to establish long Transmission Control Protocol (TCP) connections between the central node and the sub-nodes at various sites, and implement the logging and authentication from the service receiving devices of the sub-nodes at various sites to the service distributing device of the central node.

A service distributing device may send a connection request message to a service receiving device when the service distributing device is turned on, and a service receiving device may send a connection request message to a service distributing device. The connection request message contains the type of message and the logging information. The logging information may be an identification, logging password, logging IP, etc. of the sub-node to which the service receiving device belongs. The peer end returns information in a response message for indicating whether the connection is established successfully. A service receiving device needs to initiate logging and authentication via the logging protocol to the service distributing device after the long TCP connections are established. First, the service receiving device sends a logging on request message to the service distributing device. The logging request message may include the type of message, a logging identification, a logging password predetermined in advance, and a node identification of the sub-node to which the service receiving device belongs. After receiving the logging request message, the service distributing device checks the logging password, authenticates the identity of the sub-node, verifies whether the sub-node has the authority to run the service, and returns a response message carrying the type of message, an identification of node and an identification of the result of the logging in to the service receiving device if the authentication is passed.

The connection should be kept in the connection state all along in the running process of the central node and the sub-node so as to perform the interaction between the central node and the sub-node after the long TCP connection is established. The long time connection based on a heartbeat protocol between the service receiving device and the service distributing device is implemented as follows. The service distributing device or the service receiving device sends a heartbeat message to the peer end at a fixed frequency. The heartbeat message carries the type of message and the node identification of the sub-node to which the service receiving device belongs. It is indicated that the long TCP connection is in the connection state if a response returned by the peer end is received within a predetermined time interval. If the predetermined time interval expires, it is indicated that the heartbeat fails, and the service distributing device or the service receiving device performs handling according to a preset handling policy for the failure of heartbeat, for example, the service distributing device performs an operation of disconnecting the connection and / or the service receiving device sends a connection request again. The heartbeat message may be sent by the service distributing device to the service receiving device, or be sent by the service receiving device to the service distributing device, or be sent by the service distributing device and the service receiving device each other at their respective frequencies.

Fig.4 shows a flow chart of the method for distributing a service using the above system for distributing and synchronizing a service in an embodiment of the present invention. This flow is a procedure for deploying a service from a central node to sub-nodes at various sites. In this embodiment, the service adopts the form of code packet written by using a tool such as C, PHP or JAVA typically, and is automatically loaded by the service running devices for running after being deployed to the sub-nodes at various sites.

401: The service managing platform loads the code packet of the service.

402: Configure a service distributing task on the service managing platform. The service distributing task may include information such as the time when executing the task, the identification of the sub-node running the service, the identification of the service. The service distributing task is not necessary to be executed at once upon being deployed. For example, if a upgrade task of weather forecast needs to be synchronously performed in the sub-nodes running the weather forecast on 1^{st} next month, the time when executing the service distributing task may be set as certain time on 1^{st} next month. The service managing platform starts automatically to execute the service distributing task when it is the time set in advance.

403: The service managing platform instructs the service distributing device to start a distributing procedure according to the setting of the service distributing task. The service managing platform sends information, such as the service identification of the service to be run, the contents of the service data packet, and the identification of the sub-node running the service, to the service distributing device.

404: The service distributing device sends a service distributing request message to the service receiving device of the sub-node running the service. The service distributing request message is based on a service distributing protocol and used for the service distributing device to transfer the contents of the service data packet to the sub-node running the service. The service distributing request message may include information such as the type of message, an identification of a receiving sub-node, an identification of the service, and the contents of the service data packet. It is possible that the execution program of a service may be large and contain multiple service data packets. In this case, the service distributing device may perform transfer for multiple times. The sub-node receiving and running the service is hereafter called the receiving sub-node.

405: The service receiving device of the receiving sub-node starts a service receiving procedure after receiving the service distributing request message.

406: The service receiving device receives the service data packet containing the codes of the service. The service receiving device deploys the received codes of the service into a specific directory, and builds a data model of the service. If the codes of the service in the service data packet are written by using JAVA, the codes of the service may be deployed into the corresponding directory designated by the WebServer. For example, the codes of the service may be deployed into the directory, web apps, if the webmaster is implemented via a resin or tomcat container. The codes of the service may be deployed into the directory designated by the Apache server if the codes of the service in the service data packet are written by using C or PHP. Building the data model of the service is mainly to set the environment variables for running the service and to create the configuration file and service database of the service.

407: The service receiving device returns a response message to the service distributing device in response to the service distributing request message, indicating that the receiving of the codes of the service has been completed. The response message may include the type of message, an identification of the receiving sub-node, an identification of the service, an identification indicating whether the receiving is successful, etc.

408: The service distributing device returns a distributing success message to the service managing platform if the receiving of the service is completed successfully; otherwise, the service distributing device returns information about a failure in the distributing to the service managing platform, and the service managing platform determines, according to the configuration of the administrator of the central node, whether to start the service distributing task again.

The procedure described above is the service distributing process which adopts the method that the service data packet is pushed to the service receiving device by the service distributing device. As an alternative method, the distributing of a service data packet may also be implemented by adopting the method that a service receiving device acquires the service data packet from the service distributing device actively. The procedure of this method is described as follows.

The service distributing device does not carry a code packet of the service in the service distributing message and only carries the information of the storage location of the code packet of the service in the service distributing device.

The service receiving device acquires the code packet of the service with the FTP from the service distributing device after receiving the service distributing message.

The service receiving device returns the acquiring result of the code packet of the service after acquiring the code packet of the service; or the service receiving device may first return a response message to indicate that the service receiving device is in the state of receiving the service distributing message after receiving the service distributing message of the service distributing device, and return the actual result of the FTP operation after performing the FTP operation.

The codes of the service in the service data packet are deployed to the receiving sub-node after the distributing of the service is completed. However, it is not necessary for the service to be run in the service running device of the receiving sub-node at once, for example, the above online voting service. The service has a strict requirement for the real-time and synchronization of running. In general, the service is to be synchronously run in the receiving sub-nodes within a specific time interval. Therefore, the service is to be synchronously run at a specific time and synchronously stopped at another specific time, after the service data packet of the service is distributed to each of the receiving sub-nodes. The start of the running of the service is called service being online and the stop of the running of the service is called service being offline.

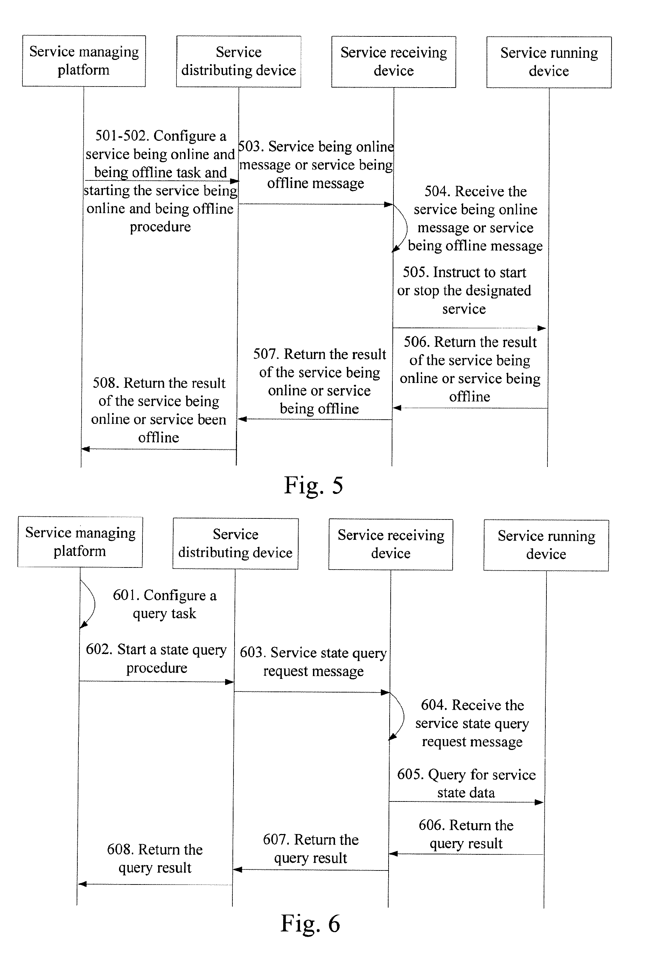

Fig.5 shows a flow chart of the method for making a service online or making the service offline using the above system for distributing and synchronizing a service in an embodiment of the present invention. The method specifically includes the processes as follows.

501: Configure a service being online task or a service being offline task on the service managing platform. For the service being online or the service being offline task, what need to be configured are the identification of the service, the time of service being online or the time of service being offline, the identification of the sub-node running the service, etc.

502: The service managing platform instructs the service distributing device to start a service being online procedure or a service being offline procedure. The service managing platform sends information, such as the identification of the service required to be online and offline, the time of the service being online or the time of the service being offline, and the identification of the sub-node running the service, to the service distributing device.

503: The service distributing device sends a service being online message or a service being offline message to the service receiving device. The service being online message or the service being offline message is based on the service state control protocol which is used for the service distributing device to send a service state control instruction to the service receiving device. The service being online message or the service being offline message may include the identification of the service and the time of the service being online or the time of the service being offline. Moreover, the message may also include the identification of the sub-node running the service. It is indicated that all the sub-nodes are to run the service if there is not the identification of the sub-node in the message.

504: The service receiving device receives the service being online message and the service being offline message, and parses the message to acquire information, such as the identification of the service and the time of the service being online or the time of the service being offline, to be used for making the service online or offline.

505: The service receiving device instructs the service running device to start or stop the designated service. The service receiving device sends an instruction to the service running device at a predetermined time to instruct the service running device to start or stop the running of the service.

506: The service running device returns the result of the start or stop of the service to the service receiving device. The service running device starts or stops the corresponding service according to the instruction of the service receiving device and returns a message indicating whether the start or stop of the service is successful to the service receiving device.

507: The service receiving device returns the result of the start or stop of the service to the service distributing device. The service receiving device reports the information indicating whether the start or stop of the service is successful received from the service running device to the service distributing device through a response message of the service being online message or the service being offline message. The response message is based on the service state control protocol as well.

508: The service distributing device returns the result of the start or stop of the service to the service managing platform.

With the above procedure, the service is run in the sub-node after being started successfully. The administrator of the central node may need to query for some state data at any moment in the running process of the service. In the running process of an online voting service, for example, the administrator may need to acquire the state of voting at certain time, such as the number of person having voted and the support ratio of a candidate. Sometimes, the administrator needs to query for whether the service running device runs normally and to query for the detail statistical data such as the current number of the messages having been received or sent. In these cases, a service query procedure needs to be applied to query for the corresponding parameter or data.

Fig.6 shows a flow chart of the method for querying for the service state data using the above system for distributing and synchronizing a service in an embodiment of the present invention. The method specifically includes the processes as follows.

601: Configure a service state querying task on the service managing platform. The identification of the sub-node related to the current query, the identification of the service, and the name of the parameter to be queried for are to be configured.

602: The service managing platform instructs the service distributing device to start a service state querying procedure. The service managing platform sends the information, such as an identification of the sub-node related to the current query, an identification of the service, and a name of the parameter to be queried for, to the service distributing device.

603: The service distributing device sends a service state query request message to the service receiving device. The message is based on a service state querying protocol and may include the type of message, an identification of the sub-node to be queried for, an identification of the service, the query instruction and the query condition, such as the number of person having voted up to a certain time.

604: The service receiving device receives the service state query request message, and parses the service state query request message to acquire the information, such as the identification of the service to be queried for, the query instruction and the query condition.

605: The service receiving device instructs the service running device to collect service state data to be queried for.

606: The service running device returns the collected service state data to the service receiving device.

607: The service receiving device sends the received service state data to the service distributing device. The service receiving device sends the service state data through a response message of the service state query request message. The response message is based on a service state querying protocol, and may include the type of the message, the identification of the sub-node, the identification of the service, and the query result.

608: The service distributing device returns the service state data to the service managing platform.

The service managing platform may perform handling of the service state data after receiving the service state data. For example, the service managing platform may write the service state data into a database. The service managing platform may perform other specific handling. For example, a threshold for number of overstocked messages is set, and the service managing platform will give an alarm when the number of the messages reported by the service running device while having not been handled is larger than the threshold.

The administrator of a central node may start the query for the state of a service with the above procedure actively, however, a fault of device may occur in a service running device in the running process of a service. The fault includes message congestion, database disconnection, disk space inadequate, and disconnection to an external device such as a short message gateway or a multimedia message center. In this case, the service running device in an embodiment of the present invention may start a service state reporting procedure actively to notify the administrator of service state data, e.g., the service running state information, to enable the administrator to know and deal with the fault in time.

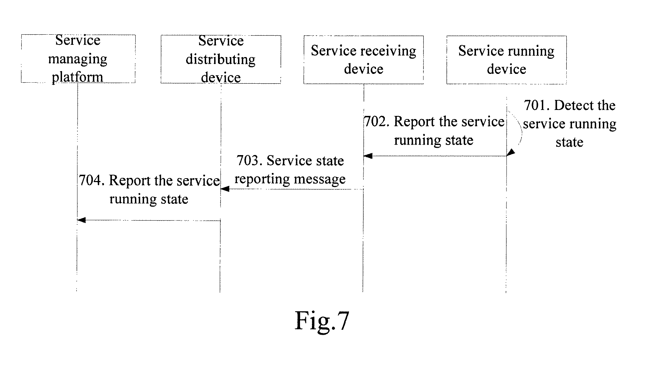

Fig.7 shows a flow chart of the method for reporting the state of a service using the above system for distributing and synchronizing a service in an embodiment of the present invention. The method specifically includes the processes as follows.

701: The service running device detects the running of the service periodically.

702: The service running device reports a service running state to the service receiving device. The service running device reports the detected fault in the running of the service to the service receiving device. The service running state information differs from the service state data reported in the service state querying procedure to an extent. The difference is mainly presented as follows. In the service state querying procedure, the service state data reported includes any data related to the running of the service that the administrator of the central node wants to acquire, so as to acquire the running state of the service in the device. In the service state reporting procedure, the service state information reported includes fault occurring in the running process of the service. The normal running of the service will be influenced if the fault is not handled in time. Therefore, the service running device reports the fault to the service managing platform through this procedure once the service running device detects such fault.

703: The service receiving device sends the service running state information to the service distributing device. The service receiving device sends the service running state information to the service distributing device through a service state reporting message. The service state reporting message is based on the service state querying protocol and may include the type of message, an identification of the sub-node, an identification of the service and service state information.

704: The service distributing device sends the service running state information to the service managing platform.

The service managing platform may perform handling of the service running state information after receiving the service running state information, mainly including writing the service running state information into a database and reporting the service running state information in a screen displaying mode.

The messages based on the logging protocol, the heartbeat protocol, the service distributing protocol, the service state control protocol and the service state querying protocol in the above procedures all may be encrypted and checked so as to guarantee the security of message transfer. The encryption method may include making a digital signature of a message with a Message Digest 5 (MD5) algorithm. Other encryption algorithms such as Data Encryption Standard (DES) symmetric encryption algorithms are applicable.

In accordance with the embodiments of the present invention, the service distributing and synchronizing task and the service querying task are created by the service managing platform and run in the task distributing and managing module in the service distributing device, and a distributing and synchronizing message or a query message is issued to the sub-nodes at various sites by the task distributing and managing module. Further, the service distributing and synchronizing task and the service querying task may also be directly run on the service managing platform, and are submitted to the task distributing and managing module via the service managing platform interface module for issuing the corresponding message. The service distributing and synchronizing task and the service querying task may be a scheduled task, that is, a task to be executed at a specific time predetermined, or may be a task to be executed immediately after being received.

In accordance with the embodiments of the present invention, with the procedures shown in Figs.4 to 7, the manpower cost spent in deploying a service and maintaining the running of the service in the sub-nodes at various sites is spared by automatically distributing the code packet of the service and the upgrade code packet of the service, and the synchronous running of the service is implemented by executing the service being online task and the service being offline task. In accordance with the present invention, it is guaranteed that the administrator of the central node can acquire the status in the running of the service by the method that the administrator queries for or the service running device reports the state parameters in the running of the service actively. Finally, the security in the message transfer process is improved by encrypting and decrypting a message.

To sum up, the above is only preferred embodiments of the present invention and is not for use in limiting the protection scope thereof.

## Claims

1. A service distributing device, **characterized by**
a task distributing and managing module, adapted to issue a service data packet and send a service task control instruction to each sub-node;
a sub-node interface module, adapted to perform information interaction with the sub-node.

2. The service distributing device of Claim 1, **characterized in that** the service task control instruction comprises: a service being online message, a service being offline message and a service state query request message.

3. The service distributing device of Claim 1 or 2, **characterized by**
a service managing platform interface module, adapted to transfer a message between the service distributing device and a service managing platform; wherein
the task distributing and managing module issues the service data packet and sends the service task control instruction to the sub-node according to an instruction received from the service managing platform via the service managing platform interface module.

4. The service distributing device of Claim 1 or 2, **characterized by**
a logging and authenticating module, adapted to authenticate the sub-node logging in to the service distributing device;

5. The service distributing device of Claim 1 or 2, **characterized by**
a first encryption and decryption module, adapted to encrypt and decrypt a message transferred between the service distributing device and the sub-node.

6. A service receiving device, **characterized by**
a service receiving and deploying module, adapted to receive a service data packet and a service task control instruction, and deploy service data in the service data packet;
a service running device interface module, adapted to perform communication between the service receiving and deploying module and a service running device to instruct the service running device to execute the service task control instruction;
a central node interface module, adapted to perform information interaction with a central node.

7. The service receiving device of Claim 6, **characterized in that** the service task control instruction comprises:
a service being online message, a service being offline message and a service state query request message.

8. The service receiving device of Claim 6 or 7, **characterized by**
a logging module, adapted to send a logging request to the central node via the central node interface module to implement logging in to the central node.

9. The service receiving device of Claim 6 or 7, **characterized by**
a second encryption and decryption module, adapted to encrypt and decrypt a message transferred between the service receiving device and the central node.

10. A system for distributing and synchronizing a service, **characterized by**
a central node, adapted to issue a service data packet and issue a service task control instruction to control execution of a service task;
a sub-node, adapted to receive a service data packet, deploy service data in the service data packet, and execute the service task under the control of the central node.

11. The system for distributing and synchronizing a service of Claim 10, **characterized in that** the service task comprises:
a service being online task, a service being offline task and a service querying task.

12. The system for distributing and synchronizing a service of Claim 10 or 11, **characterized in that** the central node comprises: a service managing platform and a service distributing device; wherein:
the service managing platform is adapted to load a service data packet, configure a service task, and instruct the service distributing device to issue the service data packet and execute the service task;
the service distributing device is adapted to issue the service data packet and the service task control instruction to the sub-node according to an instruction of the service managing platform.

13. The system for distributing and synchronizing a service of Claim 10 or 11, **characterized in that** the sub-node comprises: a service receiving device and a service running device; wherein:
the service receiving device is adapted to receive the service data packet and the service task control instruction issued by the central node, deploy the service data in the service data packet into the service running device, and instruct the service running device to execute the service task according to the service task control instruction received from the service receiving device;
the service running device is adapted to run the service data deployed by the service receiving device and execute the service task according to the service task control instruction.

14. A service processing method, **characterized by**
receiving, by each sub-node, a service data packet of a service from a central node and deploying service data in the service data packet;
synchronously starting, by the sub-nodes, running of the service data when receiving a service being online message sent by the central node.

15. The service processing method of Claim 14, **characterized by**
reporting, by each sub-node, service running state information when receiving a querying for the service running state information by the central node in the running process of a service, or
reporting the service running state information actively.

16. The service processing method of Claim 14 or 15, **characterized by**
synchronously stopping, by the sub-nodes, the running of the service data when receiving a service being offline message sent by the central node in the running process of the service.

17. The service processing method of Claim 14, 15 or 16, **characterized by**
establishing, by the sub-node and the central node, a long Transmission Control Protocol (TCP) connection, and keeping the continuous connection of the long TCP connection by sending a heartbeat message to a peer end periodically after establishing the long TCP connection.

18. The service processing method of Claim 17, **characterized by**
before receiving the service data packet sent by the central node,
sending, by the sub-node, a logging request message to the central node, and checking, by the central node, logging information in the logging request message, authenticating identity of the sub-node and verifying whether the sub-node has an authority to run the service.

19. The service processing method of Claim 14, 15 and 16, **characterized by**
after deploying the service data,
returning, by the sub-node, a response message carrying information indicating whether the service data has been deployed successfully to the central node.

20. The service processing method of Claim 15, **characterized in that** the querying by the central node the service running state information comprises:
sending, by the central node, a service state query request message to the sub-node according to a task configured in advance; and
collecting, by the sub-node, the service running state information to be queried for upon receiving the service state query request message, and reporting the service running state information to the central node.

21. The service processing method of Claim 15, **characterized in that** the reporting the service running state information by the sub-node actively comprises:
detecting, by the sub-node, a service running state periodically, and sending the service running state information to the central node.

22. A service distributing device, **characterized in that** the service distributing device is adapted to acquire a service identification of a service to be distributed, a service data packet of the service, and a respective identification of each sub-node required to execute the service, send the service data packet and the service identification to the sub-node corresponding to the identification of the sub-node so as to enable the sub-node to deploy the service; send a service being online message carrying the service identification to the sub-node for instructing the sub-node to start running of the service, upon receiving an instruction carrying the service identification for service being online.

23. The service distributing device of Claims 22, **characterized in that** the service distributing device is further adapted to send a service state query request to the sub-node corresponding to the service identification according to the service identification and the identification of the sub-node carried in a service state querying instruction, upon receiving an instruction for querying for service state data, and receive a query result from the sub-node.

24. The service distributing device of Claims 22 or 23, **characterized in that** the service distributing device is further adapted to send a service being offline message carrying the service identification to the sub-node for instructing the sub-node to stop running of the service, upon receiving an instruction carrying the service identification for service being offline.

25. A service receiving device, **characterized in that** service receiving device is adapted to acquire a service identification of a service and a service data packet containing service data of the service from a central node, deploy the service data into a service running device according to the type of the service data; instruct the service running device to start the service corresponding to the service identification, upon receiving a service being online message carrying the service identification.

26. The service receiving device of Claim 25, **characterized in that** the service receiving device is further adapted to receive a service state query request from the central node, and parse the service state query request to acquire the identification of the service to be queried for and a query condition, instruct the service running service to collect the service state data according to the service identification to be queried for and the query condition, and return the service state data collected to the central node.

27. The service receiving device of Claim 25, **characterized in that** the service receiving device is further adapted to receive service running state information reported actively by the service running device, and forward the service running state information to the central node.

28. The service receiving device according to Claim 26-27, **characterized in that** the service receiving device is further adapted to receive a service being offline message from the central node, and instruct the service running device to stop the service corresponding to the service identification carried in the service being offline message.

29. A central node subsystem, **characterized by**
a service distributing device according to Claim 22; and
a service managing platform, adapted to load the service data packet, configure a service task, and instruct the service distributing device to issue the service data packet and execute the service task.

30. A sub-node subsystem, **characterized by**
a service receiving device according to Claim 25; and
a service running device, adapted to run the service data deployed by the service receiving device and execute a service task according to a service task control instruction.

31. A system, **characterized by**
a central node subsystem according to Claim 29; and
at least one sub-node subsystem according to Claim 30.
